Europäisches Patentamt

European Patent Office

Office européen des brevets

(19)

(11) Numéro de publication : **0 164 159**
**B1**

(12)

# FASCICULE DE BREVET EUROPÉEN

(45) Date de publication du fascicule du brevet :
09.08.89

(51) Int. Cl.⁴ : **H 04 B   3/23**

(21) Numéro de dépôt : **85200741.8**

(22) Date de dépôt : **10.05.85**

(54) **Dispositif de commande d'un annuleur d'écho et d'un écrêteur de centre.**

(30) Priorité : 15.05.84 FR 8407499

(43) Date de publication de la demande :
**11.12.85 Bulletin 85/50**

(45) Mention de la délivrance du brevet :
**09.08.89 Bulletin 89/32**

(84) Etats contractants désignés :
**BE CH DE FR GB IT LI NL SE**

(56) Documents cités :
EP—A— 0 021 317
EP—A— 0 053 202
EP—A— 0 106 640
US—A— 3 894 200
US—A— 4 064 379
NTC '77 CONFERENCE RECORD, vol. 1, 5-7 décembre
1977, pages 04: 7-1 - 04: 7-8, Los Angeles, US; O.A.
HORNA: "Echo canceller utilizing pseudo-logarithmic coding"

(73) Titulaire : **TELECOMMUNICATIONS RADIOELECTRI-
QUES ET TELEPHONIQUES T.R.T.
88, rue Brillat Savarin
F-75013 Paris (FR)**

(72) Inventeur : **Lassaux, Jean
Société Civile S.P.I.D. 209 rue de l'Université
F-75007 Paris (FR)**
Inventeur : **Dagorn, Christian
Société Civile S.P.I.D. 209 rue de l'Université
F-75007 Paris (FR)**

(74) Mandataire : **Chaffraix, Jean et al
Société Civile S.P.I.D. 209, rue de l'Université
F-75007 Paris (FR)**

Jouve, 18, rue St-Denis, 75001 Paris, France

## Description

L'invention concerne un dispositif de commande pour un annuleur d'écho et un écréteur de centre insérés dans un circuit téléphonique comprenant une voie réception et une voie émission dans laquelle peut se produire un signal d'écho engendré par un signal entrant dans la voie réception, l'annuleur d'écho comprenant un filtre adaptatif connecté à la voie réception et un circuit de soustraction inséré dans la voie émission pour soustraire du signal dans la voie émission le signal de sortie du filtre adaptatif, un circuit d'ajustage ajustant automatiquement les coefficients du filtre pour que ce dernier fournisse une valeur approchée du signal d'écho, l'écréteur de centre étant inséré dans la voie émission à la sortie du circuit de soustraction pour y supprimer, lorsqu'il est mis dans son état actif, les signaux d'amplitude égale ou inférieure à un seuil d'écrétage, le fonctionnement du circuit d'ajustage des coefficients et de l'écréteur de centre étant sous la dépendance dudit dispositif de commande qui élabore des signaux de commande à partir du signal dans la voie réception et du niveau $N_{REC}$ de ce signal et à partir des niveaux $N_{AV}$ et $N_{AP}$ des signaux dans la voie émission respectivement avant et après le circuit de soustraction.

Dans l'annuleur d'écho décrit ci-dessus, le filtre adaptatif a pour but de fournir une copie aussi exacte que possible du signal d'écho qui apparaît dans la voie émission d'un circuit quatre fils, en réponse au signal engendré par un interlocuteur lointain dans la voie réception et traversant un trajet d'écho intempestif entre la voie réception et la voie émission. Lorsque le trajet d'écho ne comporte pas de circuits non linéaires pouvant engendrer du bruit, le filtre adaptatif peut former, après une période d'adaptation, un signal de copie d'écho qui permet d'obtenir pratiquement à la sortie du circuit de soustraction l'annulation du signal d'écho. Mais dans certains cas, le trajet d'écho peut être le siège d'opérations non linéaires en cascade, telles que des conversions analogiques-numériques ou MIC-MIC différentiel et inversement. Dans des cas de ce genre, le bruit de quantification accumulé dans le trajet d'écho gêne le fonctionnement du filtre adaptatif pour les faibles niveaux du signal d'écho et procure à la sortie du circuit de soustraction un niveau d'écho résiduel prohibitif. Ceci se produit par exemple dans le cas de liaisons à longue distance par satellites où un annuleur d'écho est disposé près d'une station terrienne pour annuler un écho engendré par une imperfection d'un passage deux fils-quatre fils pouvant être situé en un point quelconque du territoire national.

Pour produire un affaiblissement de l'écho résiduel que ne permet pas de supprimer l'annuleur d'écho proprement dit, le CCITT préconise de disposer dans la voie émission, à la sortie du circuit de soustraction, un circuit de traitement non linéaire appelé souvent écréteur de centre : voir à ce sujet l'avis G 165 et le rapport R 24, annexe 3, de la commission d'études XV. L'écréteur de centre est un circuit qui supprime quasiment les signaux d'amplitude égale ou inférieure à un seuil dit d'écrétage et qui transmet les signaux d'amplitude supérieure à ce seuil. La fonction de l'écréteur de centre associé à un annuleur d'écho est de supprimer le reliquat d'écho non éliminé par l'annuleur d'écho dans les phases de simple parole de l'interlocuteur distant afin que ce dernier ne puisse percevoir son propre écho, tout en perturbant le moins possible le signal de parole de l'interlocuteur proche à transmettre par la voie émission.

A l'écréteur de centre est associé un circuit de commande chargé de le mettre à chaque instant dans l'état le plus adapté pour exercer sa fonction, à savoir dans un état actif aux instants où seul un reliquat d'écho est présent à son entrée et dans un état inactif correspondant à la transmission de tous les signaux, dans toutes les autres situations, notamment en période de double parol ou lorsque l'écho est insuffisamment éliminé pour l'annuleur d'écho. Pour remplir correctement ces conditions, l'écréteur de centre doit réagir rapidement à tous les changements de situation.

Le fonctionnement du circuit d'ajustage des coefficients est également sous la dépendance d'un circuit de commande, essentiellement pour n'autoriser la correction que si le signal de sortie du circuit de soustraction (signal d'erreur commandant la correction) est significatif par rapport au niveau du signal réception, pour inhiber la correction en situation de double parole, pour mette à zéro les coefficients après une détection de divergence des coefficients et éventuellement, pour augmenter momentanément l'incrément de correction après une mise à zéro des coefficients.

Dans certains dispositifs d'annulation d'écho connus (voir par exemple l'article de Horna paru dans COMSAT Technical review Vol. 7, N° 2, 1977, pages 393, 427, la commande de l'écréteur de centre est conçue comme celle des dispositifs connus sous le nom de « suppresseurs d'écho » et est réalisée de façon indépendante de l'annuleur d'écho. Cette commande est basée sur la comparaison entre le niveau $N_{REC}$ du signal dans la voie réception et le niveau $N_{AV}$ à l'entrée de la voie émission. Lorsque le niveau $N_{REC}/N_{AV}$ est important, on suppose que seul l'interlocuteur lointain parle et produit un écho à éliminer de sorte que l'écréteur de centre est mis en action. Lorsque ce rapport devient inférieur à un seuil, on suppose que l'interlocuteur proche parle seul ou que l'on est en situation de double parole de sorte que l'écréteur de centre est mis dans un état inactif. La faiblesse de ce critère provient du fait que le signal de l'interlocuteur lointain, présent dans la voie réception, produit à l'entrée de la voie émission un écho qui peut être retardé d'une durée variable suivant le trajet d'écho. Quand le signal de l'interlocuteur lointain diminue (à la fin de chaque syllabe), un écho important peut encre être présent dans la voie émission de sorte que le rapport $N_{REC}/N_{AV}$ indique faussement une situation de double parole qui rend l'écréteur de

centre intempestivement inactif. Pour tenter de remédier à ce défaut, on peut temporiser la commande de l'écréteur de centre de son état actif vers un état inactif. Mais il en résulte une dégradation du signal de parole de l'interlocuteur proche quand celui-ci veut intervenir pendant ladite temporisation. Enfin, l'utilisation du rapport $N_{REC}/N_{AV}$ ne permet de détecter que de la double parole forte et il en résulte une distorsion du signal de parole proche en situation de double parole plus faible.

Dans un dispositif d'annulation d'écho décrit dans le brevet européen N° 0 053 202, certains des défauts ci-dessus sont surmontés en prenant en compte également le niveau $N_{AP}$ du signal après le circuit de soustraction de l'annuleur d'écho, tandis que la commande de l'écréteur de centre est conjuguée avec celle du circuit d'ajustage des coefficients. Ces commandes sont déterminées par une simple combinaison logique de trois critères résultant respectivement de la comparaison à trois seuils des trois rapports $N_{AV}/N_{REC}$, $N_{AP}/N_{REC}$ et $N_{AP}/N_{AV}$. Les inconvénients de ce système proviennent de son manque de souplesse. Ainsi les trois seuils précités qui déterminent à la fois le fonctionnement de l'annuleur d'écho et de l'écréteur de centre doivent être fixés à des valeurs de compromis qui peuvent être préjudiciables dans certaines circonstances au fonctionnement correct de l'annuleur d'écho. De même, le caractère combinatoire de la logique de commande ne permet pas de réaliser aisément la temporisation de certaines commandes qui peut être très utile dans certaines situations.

La présente invention a pour but de fournir un dispositif de commande évitant les défauts des dispositifs antérieurs et permettant une commande très fine et très souple de l'écréteur de centre et de l'annuleur d'écho.

Conformément à l'invention, ce dispositif de commande comporte des moyens pour comparer le niveau $N_{AV}$ à au moins deux niveaux fixes $N_{AV0}$, $N_{AV1}$ et pour comparer le rapport $N_{AP}/N_{AV}$ à un seuil (a) pouvant varier en fonction du niveau $N_{AV}$, des moyens d'élaboration du signal de commande de l'écréteur de centre pour mettre celui-ci dans son état actif, seulement lorsque le niveau $N_{AV}$ est compris entre $N_{AV0}$ et $N_{AV1}$ et le rapport $N_{AP}/N_{AV}$ est inférieur audit seuil (a) et pour faire varier le seuil d'écrétage selon une fonction croissante du niveau $N_{AV}$.

De préférence, des moyens sont prévus pour comparer le niveau $N_{AV}$ à plusieurs niveaux fixes compris entre $N_{AV0}$ et $N_{AV1}$ afin de former plusieurs plages consécutives pour le niveau $N_{AV}$, une valeur de seuil d'écrétage non nulle étant affectée à chaque plage, le signal de commande de l'écréteur de centre étant élaboré de façon à fournir une information de valeur de seuil d'écrétage nulle lorsque l'écréteur de centre doit être commandé pour être mis dans l'état inactif et une information de valeur de seuil d'écrétage non nulle et dépendant de la plage à laquelle appartient le niveau $N_{AV}$, lorsque l'écréteur de centre doit être commandé pour être mis dans l'état actif.

Il est avantageux dans la pratique que la commande de l'écréteur de centre de l'état inactif vers l'état actif soit retardée d'une certaine durée, par exemple de l'ordre de 100 mS.

Dans un mode de réalisation particulièrement avantageux, le circuit de commande de l'invention utilise les mêmes blocs en nombre réduit pour réaliser les fonctions nécessaires à la commande de l'annuleur d'écho et celles nécessaires à la commande de l'écréteur de centre. Ce mode de réalisation s'applique à la commande d'un annuleur d'écho et d'un écréteur de centre insérés dans un circuit téléphonique transmettant des signaux MIC comprimés, l'annuleur d'écho comportant un convertisseur d'entrée pour convertir le signal comprimé S'(n) entrant dans la voie émission en signal linéaire S(n) et un convertisseur de sortie pour convertir le signal linéaire R(n) fourni par le circuit de soustraction en signal comprimé R'(n) à appliquer à l'écréteur de centre. Selon ce mode de réalisation, le convertisseur d'entrée est utilisé en répartition dans le temps pour convertir également le signal comprimé X'(n) dans la voie réception en signal linéaire X(n), les signaux convertis en linéaire S(n), X(n) et le signal linéaire R(n) fournis par le circuit de soustraction étant appliqués en répartition dans le temps à un bloc de calcul agencé avec une mémoire vive pour former un filtre récursif fournissant les signaux de niveaux $N_{REC}$, $N_{AV}$, $N_{AP}$, ces signaux de niveaux étant appliqués en répartition dans le temps avec le signal R(n) audit convertisseur de sortie qui fournit à un bloc de comparaison de niveaux le signal comprimé R'(n) et les signaux de niveaux comprimés $N'_{REC}$, $N'_{AV}$ et $N'_{AP}$.

La description suivante en regard des dessins annexés, le tout donné à titre d'exemple, fera bien comprendre comment l'invention peut être réalisée.

La figure 1 est un schéma sommaire montrant un annuleur d'écho et un écréteur de centre associés au dispositif de commande de l'invention.

La figure 2 est un diagramme représentant la fonction de transfert de l'écréteur de centre.

La figure 3 est un diagramme représentant dans un plan de coordonnées $N_{AV}$, $N_{AP}$ des zones dans lesquelles l'écréteur de centre doit être commandé pour mis dans un état actif ou dans un état inactif.

La figure 4 est un diagramme analogue à celui de la figure 3, dans lequel la zone correspondant à une commande d'activité de l'écréteur de centre est divisée en plusieurs zones correspondant à des seuils d'écrétage différents.

Les figures 5 et 6 sont des représentations partielles d'un organigramme décrivant le fonctionnement d'un circuit de commande conforme à l'invention.

La figure 7 est un schéma d'un mode de réalisation avantageux du circuit de commande de l'invention.

La figure 8 est un schéma du circuit de calcul des niveaux $N_{REC}$, $N_{AP}$, $N_{AV}$.

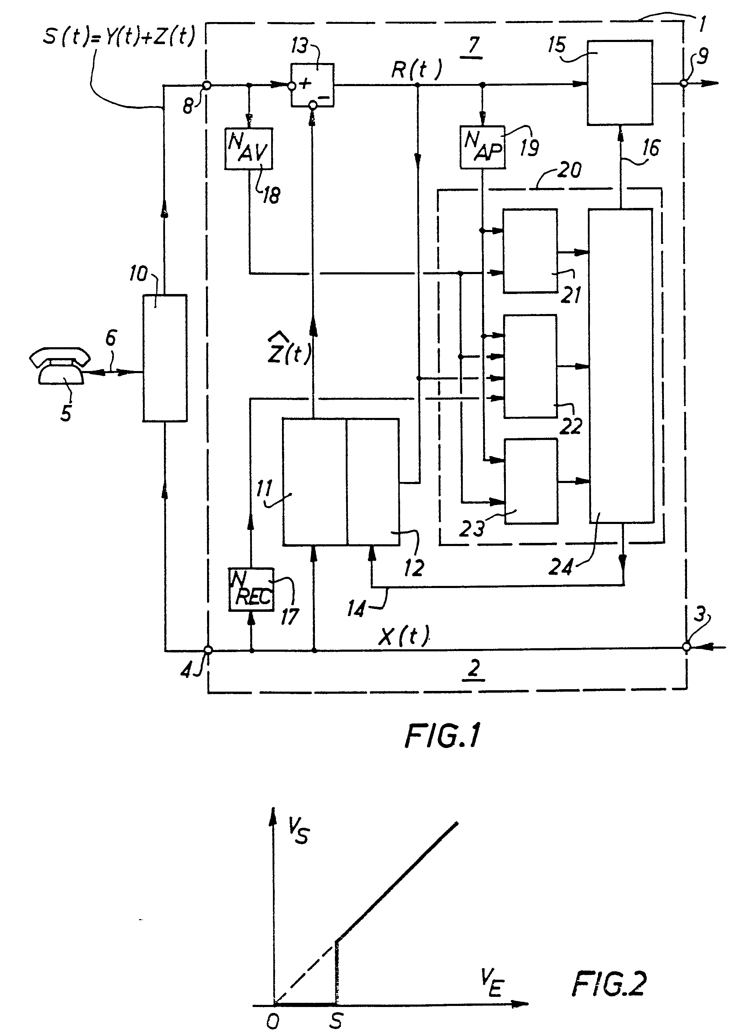

Sur la figure 1 on a représenté en 1 un dispositif d'annulation d'écho inséré dans la partie quatre-fils d'un circuit de transmission téléphonique qui peut transmettre par exemple des signaux codés en MIC, chaque voie MIC étant échantillonnée à la fréquence $1/T = 8$ KHZ. Pour simplifier, on n'a pas représenté les circuits et les signaux de cadencement nécessaires, ni les convertisseurs de signal MIC en signal linéaire et inversement qui peuvent être nécessaires. Le dispositif peut être disposé par exemple près d'une station terrienne dans une liaison à longue distance par satellite. Le circuit quatre-fils comporte une voie réception 2 dont l'entrée 3 reçoit, via le trajet par satellite, le signal de parole $X(t)$ d'un interlocuteur lointain. Ce signal est à transmettre via la borne de sortie 4 de la voie réception à un abonné dit proche, situé sur le territoire national et dont le poste représenté en 5 est connecté par un circuit deux fils 6. La voie émission 7 du circuit quatre-fils reçoit sur son entrée 8 le signal $S(t)$ qui, en l'absence d'écho, est formé par le signal de parole $Y(t)$ de l'abonné proche, qui est à transmettre via la sortie 9 de la voie émission vers le poste de l'abonné lointain. Par suite d'imperfections dans la liaison entre le circuit quatre-fils 2, 7 et le circuit deux fils 6 de l'abonné proche, imperfections produites notamment par le circuit de couplage deux fils-quatre fils le plus proche de cet abonné, le signal $X(t)$ de l'abonné lointain engendre à l'entrée 8 de la voie émission, un signal d'écho parasite $Z(t)$ qui peut s'ajouter au signal de parole $Y(t)$ de l'abonné proche et qui peut être transmis via la borne de sortie 9, vers le poste de l'abonné lointain.

Le trajet du signal d'écho est représenté par le rectangle 10 qui est connecté d'une part entre les bornes 4 et 8 du circuit quatre fils et d'autre part au circuit deux fils 6 de l'abonné proche.

Un dispositif connu, chargé d'annuler le signal d'écho $Z(t)$ dans la voie émission consiste en un annuleur d'écho qui comporte un filtre adaptatif 11 dont l'entrée est connectée à la voie réception 2. Ce filtre comporte des moyens de retard pour stocker N échantillons successifs du signal $X(t)$ de la voie réception, se produisant pendant une durée NT au moins égale à la durée de la réponse impulsionnelle du trajet d'écho, T étant la période d'échantillonnage. Le filtre 11 comporte également des moyens de calcul pour effectuer une opération de convolution entre les échantillons précités du signal $X(t)$ et N coefficients à ajuster automatiquement à l'aide du circuit d'ajustage 12 de façon à être pratiquement égaux à des échantillons de la réponse impulsionnelle du trajet d'écho pendant la durée NT. S'il en est ainsi, le signal $\hat{Z}(t)$ fourni par le filtre 11 est une copie quasiment exacte du signal d'écho intempestif $Z(t)$. Pour annuler cet écho, on utilise un circuit de soustraction 13 dont la borne positive est connectée à l'entrée 8 de la voie émission, dont la borne négative est connectée à la sortie du filtre 11 et dont la borne de sortie fournit le signal $R(t)$. Ce signal $R(t)$ est utilisé dans le circuit 12 d'ajustage des coefficients du filtre 11. On réalise ainsi une boucle d'asservissement qui opère généralement par itérations successives produisant chacune un incrément positif ou négatif de correction des coefficients. Après un certain nombre d'itérations, les coefficients convergent vers leurs valeurs idéales et le signal $R(t)$ est pratiquement débarassé d'écho. $R(t)$ est quasiment nul en période de silence de l'abonné proche et quasiment égal au signal $Y(t)$ en période de parole de l'abonné proche.

D'autre part, pour n'autoriser la correction des coefficients qu'à bon escient, pour inhiber cette correction, remettre à zéro les coefficients et accélérer la correction dans diverses circonstances, le circuit d'ajustage des coefficients reçoit via la liaison 14 un signal de commande dont l'élaboration sera expliquée par la suite.

Mais, comme on l'a déjà expliqué, le compensateur d'écho ne peut annuler correctement l'écho que si dans le trajet d'écho 10 ne sont pas effectuées d'opérations non linéaires. Comme ce trajet d'écho peut être important dans un territoire national, il peut s'y produire plusieurs conversions de signaux de type non linéaire qui engendrent un bruit de quantification indérisable et produisant dans le signal $R(t)$ un niveau résiduel gênant.

Pour amener ce signal d'écho résiduel à un niveau très faible et non gênant, la solution préconisée par le CCITT est de disposer dans la voie émission, après la sortie du circuit de soustraction 13, un écréteur de centre 15 effectuant dans son état actif un traitement non linéaire conforme à la fonction de transfert représentée sur la figure 2. Selon la figure 2, pour tous les signaux d'entrée d'amplitude $V_E$ égale ou inférieure au seuil d'écrétage S, le signal de sortie a une amplitude $V_S$ nulle. Les signaux d'entrée d'amplitude $V_E$ supérieure au seuil S sont transmis à la sortie sans modification. Dans son état inactif, l'écréteur de centre doit transmettre tous les signaux sans modification.

L'écréteur de centre reçoit, via la liaison 16 un signal de commande destiné substantiellement à la mettre dans l'état actif seulement lorsque existe à la sortie du soustracteur 13 un écho résiduel non éliminé par l'annuleur d'écho et dans l'état inactif dans toutes les autres circonstances.

Dans certains dispositifs d'annulation d'écho connus (voir par exemple l'article de Horna précité), l'écréteur de centre est commandé indépendamment de l'annuleur d'écho sans bénéficier d'informations fournies par ce dernier ; pratiquement l'écréteur de centre est commandé par comparaison du niveau $N_{REC}$ dans la voie réception et du niveau $N_{AV}$ à l'entrée de la voie émission, ces niveaux $N_{REC}$ et $N_{AV}$ étant fournis par les circuits intégrateurs 17 et 18. Ces dispositifs ont notamment l'inconvénient de détecter de façon incorrecte les situations de double parole pour lesquelles l'écréteur de centre doit être inactif.

Le dispositif du brevet européen N° 0 053 202, utilise pour la commande de l'écréteur de centre et de l'annuleur d'écho les deux niveaux $N_{REC}$ et $N_{AV}$ et en outre le niveau $N_{AP}$ du signal dans la voie émission après la compensation de l'écho effectuée par le circuit de soustraction 13, ce niveau $N_{AP}$ étant fourni par le circuit d'intégration 19. Ce dispositif a l'inconvénient d'utiliser les mêmes critères avec une logique combinatoire pour la commande de l'écréteur de centre et de l'annuleur d'écho, ce qui ne permet pas d'obtenir la commande optimale pour ces deux dispositifs.

La présente invention fournit un dispositif de commande 20 élaborant la commande de l'écréteur de centre et de l'annuleur d'écho à l'aide de critères de décision distincts. Selon la représentation fonctionnelle montrée sur la figure 1, les informations nécessaires à la prise de décision pour la commande de l'écréteur de centre sont élaborées en 21 à partir des niveaux $N_{AV}$ et $N_{AP}$, les informations nécessaires à la prise de décision pour la commande de correction des coefficients de l'annuleur d'écho sont élaborées en 22 à partir des niveaux $N_{AV}$, $N_{AP}$, $N_{REC}$ et du signal $R(t)$ et enfin les informations nécessaires à la prise de décision pour la commande de remise à zéro de ces coefficients sont élaborées en 23 à partir des niveaux $N_{AV}$ et $N_{AP}$. A partir des informations obtenues en 21, 22 et 23, une logique séquentielle 24 élabore le signal de commande, appliqué via la liaison 16, à l'écréteur de centre et le signal de commande, appliqué, via la liaison 14, au circuit d'ajustage des coefficients. Selon un mode de réalisation avantageux du dispositif de commande que l'on décrira par la suite, les fonctions représentées de façon distincte en 21, 22, 23 peuvent être pratiquement réalisées en utilisant les mêmes circuits de calcul et les mêmes mémoires.

On va décrire maintenant les critères de décision utilisés dans le dispositif de l'invention pour la commande de l'écréteur de centre.

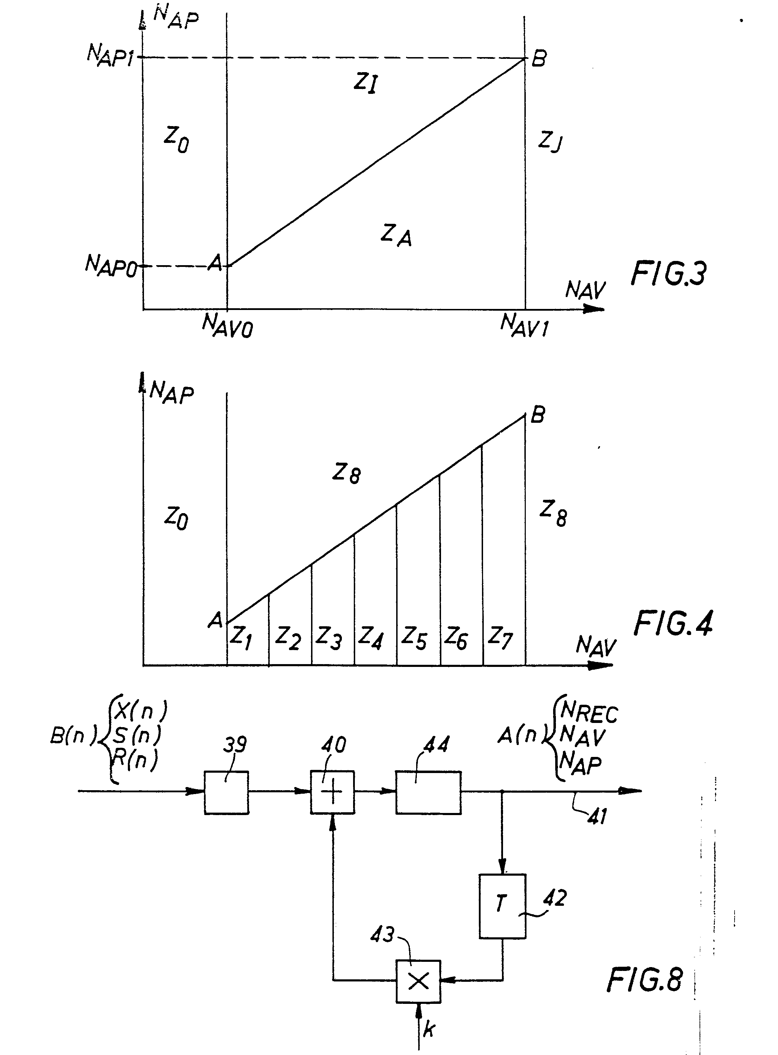

La décision d'activation de l'écréteur de centre est basée sur les valeurs du niveau $N_{AV}$ et du rapport $N_{AP}/N_{AV}$, conformément au diagramme de la figure 3. Sur ce diagramme, sont portés respectivement en abscisses et en ordonnées les niveaux $N_{AV}$ et $N_{AP}$ exprimés en dBmO. Dans la zone $Z_0$, pour laquelle le niveau $N_{AV}$ est inférieur à un niveau fixe $N_{AV0}$, l'écréteur de centre doit être commandé pour être inactif. Pour les valeurs du niveau $N_{AV}$ comprises entre les deux niveaux fixes $N_{AV0}$ et $N_{AV1}$, l'écréteur de centre doit être commandé pour être mis dans un état actif ou inactif selon les valeurs du rapport $N_{AP}/N_{AV}$ vis-à-vis d'un seuil a pouvant varier en fonction de $N_{AV}$. Pour préciser ce seuil a, on définit le point A de coordonnées $(N_{AV0}, N_{AP0})$ et le point B de coordonnées $(N_{AV1}, N_{AP1})$. Lorsque le point de coordonnées $(N_{AV}N_{AP})$ se trouve dans la zone $Z_A$ au dessous du segment AB, l'écréteur de centre doit être commandé pour être actif (valeurs faibles du rapport $N_{AP}/N_{AV}$). Lorsque le point $(N_{AP}, N_{AV})$ se trouve dans la zone $Z_I$ au dessus du segment AB, l'écréteur de centre doit être commandé pour être inactif. Enfin, dans la zone $Z_J$ pour laquelle le niveau $N_{AV}$ est supérieur au niveau fixe $N_{AV1}$, l'écréteur de centre doit être commandé pour être inactif. De plus, le dispositif de commande de l'invention doit fournir à l'écréteur de centre un signal de commande faisant varier, dans la zone d'activité $Z_A$, le seuil d'écrétage S selon une fonction croissante du niveau $N_{AV}$. Dans les zones où l'écréteur de centre doit être inactif, il suffit que le signal de commande soit tel que le seuil S soit égal à zéro.

Avec un écréteur de centre commandé comme on vient de le décrire, on obtient bien la suppression de l'écho résiduel dans les conditions requises, en perturbant le moins possible la transmission du signal de parole proche. En effet, la valeur du niveau $N_{AV}$ est un paramètre définissant l'utilité de l'activation de l'écréteur de centre : si le niveau $N_{AV}$ est trop faible (inférieur à $N_{AV0}$), l'écréteur de centre ne sert à rien, car le niveau résiduel à la sortie de l'annuleur d'écho est imperceptible : si le niveau $N_{AV}$ est trop grand (supérieur à $N_{AV1}$), on est en présence d'un signal sur la voie émission dépassant la capacité de charge de la transmission numérique MIC (présence de non-linéarités). D'autre part, l'écréteur de centre ne doit être rendu actif qu'en présence de simple parole de l'interlocuteur lointain et dans un état de convergence avancé de l'annuleur d'écho (l'écréteur de centre ne peut remplir son office si l'affaiblissement d'écho procuré par l'annuleur d'écho n'est pas suffisant). Ces deux conditions sont caractérisées par un rapport $N_{AD}/N_{AV}$ faible (inférieur au seuil a). Aussitôt que l'une de ces conditions n'est pas satisfaite (double parole ou état de convergence insuffisant), le rapport $N_{AP}/N_{AV}$ s'élève instantanément puisque les niveaux $N_{AP}$ et $N_{AV}$ après et avant l'annuleur d'écho ne présentent aucun retard l'un par rapport à l'autre. L'écréteur de centre peut alors être rendu immédiatement inactif, ce qui évite les problèmes de temporisation qui se posent dans les écréteurs de centre connus lors de la détection de la double parole. Enfin, par le fait que dans le dispositif de l'invention, on fait varier le seuil d'écrétage S selon une fonction croissante du niveau $N_{AV}$, on peut avec une loi de variation judicieusement choisie, limiter l'action de l'écréteur de centre au strict nécessaire et réduire ainsi dans une grande mesure certains effets nuisibles de l'écréteur de centre.

Les coordonnées des points A et B sur le diagramme de la figure 3, qui définissent le seuil variable a du rapport $N_{AP}/N_{AV}$ dans l'intervalle $(N_{AV0}, N_{AV1})$, peuvent être choisis de façon à détecter le plus finement possible toute intervention de l'interlocuteur proche et à éliminer l'écho résiduel dans toute situation de simple parole au cours d'une conversation. On peut choisir par exemple pour le point A, les coordonnées $N_{AV0} = -40$ dBmO et $N_{AP0} = -52$ dBmO, ce qui correspond à un rapport $N_{AP0}/N_{AV0} = -12$ dB. Pour le point B, les coordonnées peuvent être $N_{AV1} = -4$ dBmO et $N_{AP1} = -18$ dBmO, ce qui correspond à un rapport $N_{AP1}/N_{AV1} = -14$ dB.

Pour faire varier le seuil d'écrétage S de l'écréteur de centre en fonction du niveau $N_{AV}$, il est suffisant dans la pratique de diviser l'intervalle $(N_{AV0}, N_{AV1})$ dans lequel l'écréteur de centre doit être commandé pour être actif en plusieurs plages de niveau $N_{AV}$, avec un seuil d'écrétage attribué à chaque plage. Le diagramme de la figure 4 permet d'expliquer comment on peut commander de façon simple à la fois l'activité de l'écréteur de centre et le seuil d'écrétage. Sur ce diagramme reproduisant en partir celui de la figure 3, on retrouve la zone $Z_0$ où l'écréteur de centre doit être commandé pour être inactif et une

zone $Z_8$ recouvrant les zones $Z_I$ et $Z_J$ où l'écréteur de centre doit être commandé pour être inactif. Mais la zone d'activité $Z_A$ de l'écréteur de centre a été divisée en sept zones $Z_1$ à $Z_7$ caractérisées par des valeurs croissantes du niveau $N_{AV}$. A ces zones $Z_1$ à $Z_7$ sont attribuées des valeurs de seuil d'écrétage non nulles et croissantes. Au moment de la décision d'activation de l'écréteur de centre, le seuil d'écrétage S est fixé en fonction de la zone à laquelle appartient le point de coordonnées $(N_{AV}, N_{AP})$.

Le tableau I ci-dessous montre à titre d'exemple des valeurs du niveau $N_{AV}$ limitant les zones $Z_1$ à $Z_7$, avec en regard des valeurs possibles pour le seuil d'écrétage.

Tableau I

| $N_{AV}$ (dBm0) | Zone | Seuil d'écrétage (dBmo) |
|---|---|---|
| $-40 < \bullet < -34$ | $Z_1$ | $-44$ |
| $-34 < \bullet < -30$ | $Z_2$ | $-40$ |
| $-30 < \bullet < -26$ | $Z_3$ | $-36$ |
| $-26 < \bullet < -22$ | $Z_4$ | $-32$ |
| $-22 < \bullet < -18$ | $Z_5$ | $-28$ |
| $-18 < \bullet < -14$ | $Z_6$ | $-24$ |
| $-14 < \bullet < -4$ | $Z_7$ | $-20$ |

Si le point de coordonnées $(N_{AP}, N_{AV})$ appartient à l'une des zones $Z_0$ ou $Z_8$ il doit être rendu inactif et comme on l'a déjà indiqué ceci peut être obtenu en fixant le seuil d'écrétage à la valeur zéro. Dans l'exemple de sept zones $Z_1$ à $Z_7$ correspondant à des seuils d'écrétage non nuls, la commande complète de l'écréteur de centre peut donc être effectuée avec un nombre à 3 éléments binaires permettant de commander huit seuils d'écrétage différents, dont l'un est nul.

Enfin, il s'est avéré avantageux dans la pratique que lorsque l'écréteur de centre étant dans l'état inactif défini par la zone $Z_8$ (situation de double parole ou de non convergence de l'annuleur d'écho), on détecte une situation de simple parole associées à une convergence de l'annuleur d'écho, la commande de l'écréteur de centre vers un état actif défini par l'une des zones $Z_1$ à $Z_7$ soit retardée d'une valeur de l'ordre de la centaine de mS. Cette temporisation permet de s'assurer du retour réel à la situation de simple parole et de laisser le temps à l'annuleur d'écho de revenir à un état de convergence avancé.

On va maintenant décrire les critères de décision utilisés pour la commande du circuit d'ajustage des coefficients de l'annuleur d'écho. Cette commande se traduit par trois actions distinctes.

Une première action consiste à n'autoriser la correction des coefficients à un instant d'échantillonnage nT (n étant un nombre entier définissant l'instant d'échantillonnage) que lorsque l'échantillon R(n) du signal R(t) fourni par l'annuleur d'écho qui définit l'amplitude de la correction de chaque coefficient est supérieur à un certain niveau minimal et est significatif par rapport au niveau $N_{REC}$ du signal dans la voie réception. En effet, les coefficients de l'annuleur d'écho ne doivent pas être modifiés à partir du bruit de calcul ou de quantification. Ces deux conditions d'autorisation de correction des coefficients peuvent se traduire par les relations

$$R(n) > R_0 \qquad (1)$$

$$R(n)/N_{REC} > b \qquad (2)$$

$R_0$ étant une constante définissant un niveau minimal

b étant une constante que l'on fixe pratiquement à partir du bruit de calcul introduit par le filtre de l'annuleur d'écho.

D'autre part, si les signaux traités par le dispositif d'annulation d'écho sont codés en MIC, la correction des coefficients n'est autorisée que si le niveau du signal réception se trouve dans une plage $(N_1, N_2)$ admettant en ce qui concerne le bruit de quantification introduit par le codage MIC, un rapport signal/bruit constant, afin de limiter l'erreur de correction qui est proportionnelle au bruit de quantification entachant le signal réception. Cette condition d'autorisation de correction des coefficients se traduit par la relation

$$N_{RECO} < N_{REC} < N_{REC1} \qquad (3)$$

Enfin, la correction des coefficients est inhibée aux instants de double parole forte qui se traduit par un niveau $N_{AV}$ à l'entrée de la voie émission, significatif par rapport au niveau $N_{REC}$ dans la voie réception, et par un niveau $N_{AP}$ du même ordre que le niveau $N_{AV}$. De cette façon, même en présence d'une très faible compensation d'écho (atteinte après quelques dizaines de mS suivant une initialisation des coefficients), il ne se produira pas de fausse détection de double parole X(n). La condition d'inhibition des coefficients peut se traduire par les deux relations :

$$N_{AV}/N_{REC} > c \qquad N_{AP}/N_{AV} > d \qquad (4)$$

c étant égal par exemple à — 5 dB, d étant égal par exemple à — 3 dB.

L'inhibition de la correction des coefficients peut être décrétée également par une commande externe.

Une deuxième action consiste à accélérer momentanément la correction des coefficients après une remise à zéro de ces coefficients. En effet, après une telle remise à zéro, il importe que l'annuleur d'écho produise un affaiblissement de l'écho le plus rapidement possible, afin que l'interlocuteur lointain ne puisse percevoir qu'un minimum de temps son propre écho. Ainsi une correction accélérée des coefficients est opérée en donnant à l'amplitude de correction une valeur supérieure à la valeur de régime, aussitôt après une remise à zéro des coefficients pendant un temps limité TPOS.

Enfin une troisième action consiste à remettre à zéro les coefficients après la détection d'une divergence des coefficients pendant un temps TDIV. Cette action a pour but d'empêcher l'annuleur d'écho de produire une amplification de l'écho en cas de désadaptation engendrée par exemple par un changement brutal du trajet d'écho. A la suite de cette remise à zéro, la correction des coefficients s'opère suivant un mode accéléré, comme on l'a expliqué ci-dessus, pour former rapidement de nouveaux coefficients adaptés. Il est clair qu'une divergence des coefficients peut être détectée en comparant les niveaux $N_{AP}$ et $N_{AV}$. Un état de divergence des coefficients est détecté si

$$N_{AP}/N_{AV} > 1 + \varepsilon \qquad (5)$$

$$N_{AV} > N_{AV0} \qquad (6)$$

$\varepsilon$ étant faible par rapport à 1
$N_{AV0}$ étant égal par exemple à — 40 dBmO.

La remise à zéro des coefficients peut également être décrétée par une commande externe.

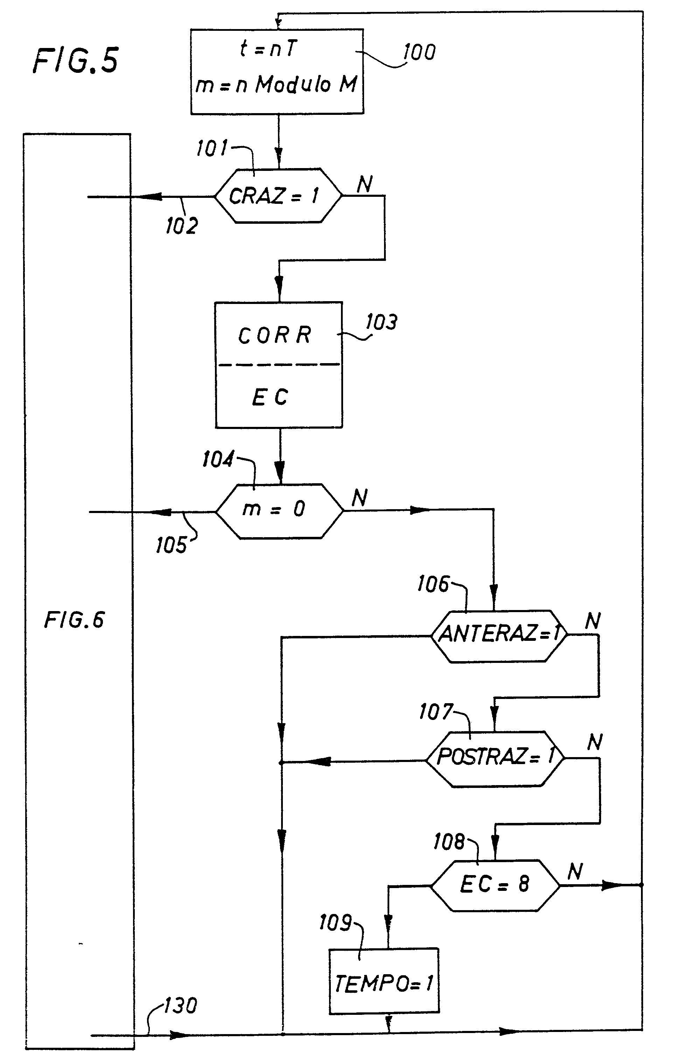

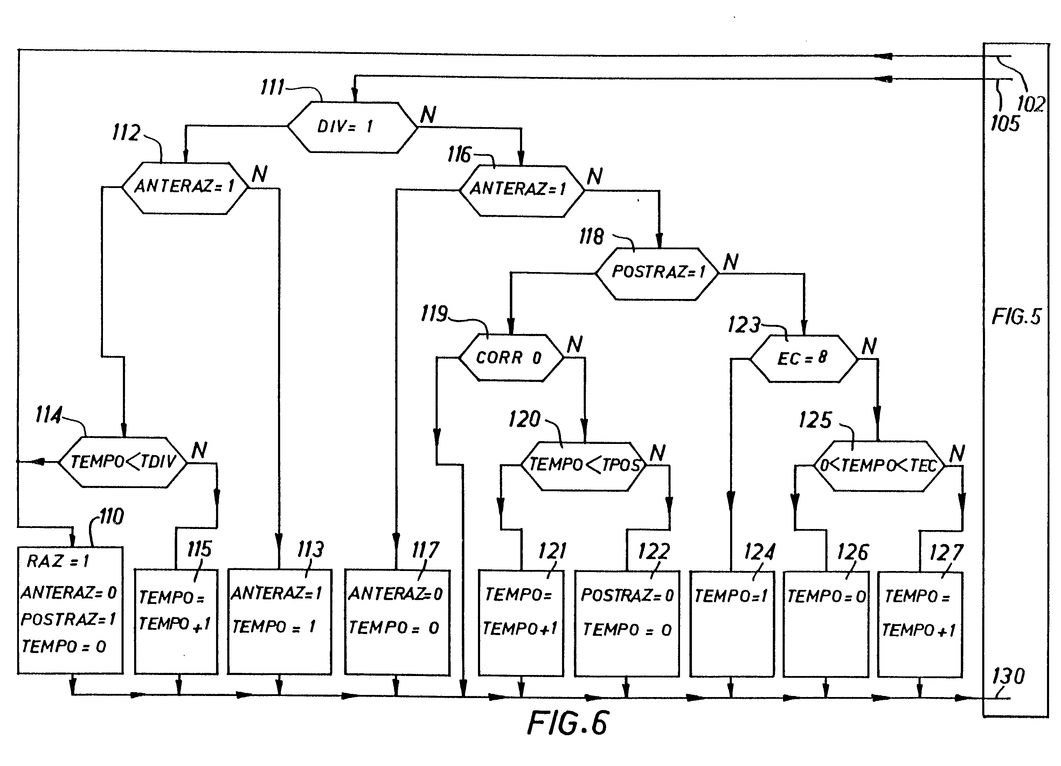

Les critères à utiliser pour la décision de commande de l'écréteur de centre et du circuit d'ajustage des coefficients et élaborés en 21, 22, 23 sont fournis à une logique séquentielle 24, l'ensemble coopérant selon le fonctionnement décrit par l'organigramme des figures 5 et 6 pour mettre à jour six informations distinctes que l'on peut décomposer comme suit :

quatre informations de sortie, à savoir :

L'information binaire CORR autorisant ou non la correction des coefficients de l'annuleur d'écho, en fonction des critères définis par les formules (1) à (4). L'information CORR est mise à jour à chaque période d'échantillonnage d'une voie téléphonique (T = 125 $\mu$S).

L'information binaire POSTRAZ commandant ou non une correction accélérée des coefficients, dans les circonstances ci-dessus définies. L'information POSTRAZ est mise à jour avec la périodicité MT (par exemple M = 64 et MT = 8 mS)

L'information binaire RAZ commandant ou non la remise à zéro des coefficients. Cette information peut être obtenue à partir d'une commande externe CRAZ ou après la détection d'une divergence des coefficients (DIV = 1 si les conditions (5) et (6) sont vérifiées) pendant un temps TDIV. L'information RAZ est mise à jour à chaque période d'échantillonnage. Les informations CORR, POSTRAZ, RAZ sont transmises via la ligne 14 au circuit d'ajustage 12 des coefficients de l'annuleur d'écho.

L'information EC utilisée pour la commande de l'écréteur de centre est mise à jour à chaque période d'échantillonnage. Dans l'exemple du diagramme de la figure 4 que l'on utilisera par la suite de la description sont définies 9 zones possibles $Z_0$ à $Z_8$ pour le point de coordonnées $N_{AV}/N_{AP}$. L'information EC est alors un nombre entier dont les valeurs allant de 0 à 8 correspondant respectivement aux zones $Z_0$ à $Z_8$. Si l'information EC est exprimée à l'aide de 4 éléments binaires, ses 3 éléments binaires de plus faible poids suffisent pour la commande de l'écréteur de centre qui doit être commandé dans l'état actif pour les zones $Z_1$ à $Z_7$ et dans l'état inactif pour les zones $Z_0$ et $Z_8$. Ces trois éléments binaires de plus faible poids de EC sont transmis à l'écréteur de centre via la liaison 16. L'élément binaire de plus fort poids de l'information EC suffit pour indiquer que EC = 8 (appartenance du point $N_{AV}$, $N_{AP}$ à la zone $Z_8$) et il n'est utilisé que pour le fonctionnement interne de la logique séquentielle.

deux informations à usage interne à savoir :

L'information binaire ANTERAZ indiquant un état de prédétection de divergence. Plus précisément, l'information ANTERAZ prend l'état 1 aussitôt que DIV = 1 et prend l'état 0 à l'issue du temps TDIV : à ce moment c'est l'information RAZ qui prend l'état 1. L'information ANTERAZ est mise à jour avec la périodicité MT.

L'information TEMPO utilisée pour la réalisation de diverses temporisations utiles pour former les informations de commande, c'est-à-dire le temps TDIV (temps de divergence nécessaire pour commander la remise à zéro des coefficients), le temps TPOS (temps de correction accéléré des coefficients), le temps

EP 0 164 159 B1

TEC (temporisation de l'information de commande EC de l'écréteur de centre, lorsqu'il doit passer de l'état inactif défini par la zone 8 à l'état actif défini par les zones 1 à 7).

Comme on le verra en décrivant l'organigramme des figures 5 et 6, l'information TEMPO qui est formée dans un compteur est mise à jour en général avec une périodicité MT ; elle peut être incrémentée depuis une valeur égale à zéro jusqu'à une valeur maximale de 15 par exemple puis remise ensuite à zéro, ce qui permet de réaliser des temporisations allant jusqu'à 128 mS dans l'exemple précité.

L'information TEMPO a une importance particulière pour la commande de l'écréteur de centre, car elle intervient pour former l'information de commande EC. L'information TEMPO a une valeur non nulle pour toute situation définie par les zones $Z_0$ et $Z_8$, c'est-à-dire ne correspondant pas à un état de simple parole associé à un état de convergence de l'annuleur d'écho. Tant que l'information TEMPO a une valeur non nulle, les trois éléments binaires de faible poids de EC sont forcés à zéro (état inactif de l'écréteur de centre). Aussitôt qu'une situation de double parole ou de divergence de l'annuleur d'écho est détectée (situation correspondant à la zone $Z_8$) l'information TEMPO est mise à 1 ; ceci peut se produire à chaque période T. Puis, lorsqu'une situation de simple parole associée à un état de convergence de l'annuleur d'écho est détectée (situation correspondant aux zones $Z_1$ à $Z_7$) l'information TEMPO est incrémentée toutes les MT secondes jusqu'à une valeur 15, avant d'être ensuite remise à zéro. De cette manière, on a retardé d'un temps TEC = 16 MT = 128 mS la mise à l'état actif de l'écréteur de centre.

Le fonctionnement du dispositif de commande de l'invention selon l'organigramme des figures 5 et 6 peut se décrire comme suit.

Sur la figure 5, la case 100 indique la succession dans le temps t de périodes d'échantillonnage T (125 $\mu$S) caractérisées chacune par le nombre entier n. Ces périodes successives sont comptées modulo M, et définies alors par m = n modulo M, avec M égal par exemple à 64.

La case 101 indique qu'à chaque période T (quelle que soit la valeur de m) le dispositif de commande examine si une commande externe de remise à zéro des coefficients est détectée : CRAZ = 1. Dans le cas où CRAZ = 1, l'organigramme se poursuit par la liaison 102 vers la figure 6 que l'on décrira par la suite. Dans le cas où la commande externe de remise à zéro des coefficients n'est pas détectée, l'organigramme se poursuit par la case 103 qui indique la mise à jour des informations de sortie CORR et EC à chaque période d'échantillonnage T. La mise à jour de l'information binaire CORR est effectuée en fonction des valeurs de R(n), $N_{REC}$, $N_{AV}$, $N_{AP}$ selon les critères des formules (1) à 4) et en fonction éventuellement d'une commande externe. La mise à jour de l'information EC à 9 états est effectuée en fonction des valeurs de $N_{AV}$ et $N_{AP}$, comme on l'a défini à l'aide du diagramme de la figure 4 et en fonction de la variable interne TEMPO, comme on le verra par la suite.

L'organigramme se poursuit par la case 104 qui indique que le dispositif de commande teste parmi les périodes d'échantillonnage successives celles qui sont telles que m = 0, ce qui se produit avec la période MT (8 6mS). Pour les périodes d'échantillonnage telles que m = 0 l'organigramme se poursuit par la liaison 105 vers la figure 6 à décrire par la suite.

Pour toutes les autres périodes d'échantillonnage telles que m $\neq$ 0 la case 106 indique que le dispositif de commande teste si ANTERAZ = 1. S'il en est ainsi, ce qui indique une prédétection de divergence des coefficients, le processus recommence à la période d'échantillonnage suivante (retour à la case 100). Si ANTERAZ = 0, la case 107 indique que le dispositif de commande teste si POSTRAZ = 1. S'il en est ainsi, ce qui indique qu'une correction accélérée des coefficients est en cours, le processus recommence à la période d'échantillonnage suivante (retour à la case 100).

Si POSTRAZ = 0, la case 108 indique que le dispositif de commande teste si EC = 8. S'il en est ainsi, ce qui indique que l'écréteur de centre se trouve dans l'état inactif défini sur le diagramme de la figure 4 par la zone 8, l'information TEMPO est fixée à l'état 1 comme l'indique la case 109 et le processus recommence à la période d'échantillonnage suivante. Si EC $\neq$ 8, le processus recommence à la période d'échantillonnage suivante. On peut noter que le processus englobant les cases 106 à 109 permet de mettre à 1 l'information TEMPO dans une situation de double parole ou de divergence partielle des coefficients, conformément à ce qui a été expliqué plus haut.

On décrit maintenant la partie de l'organigramme représentée sur la figure 6. Outre les liaisons 102 et 105 déjà mentionnées, la figure 6 est reliée à la figure 5 par la liaison 130 qui indique un retour à l'étape représentée par la case 100.

L'information sur la liaison 102 indique à n'importe quelle période d'échantillonnage la détection d'une commande externe de remise à zéro des coefficients. Il en résulte immédiatement les mises à jour des informations indiquées dans la case 110 et la réalisation des actions correspondantes, c'est-à-dire RAZ = 1 : la remise à zéro des coefficients est commandée.

ANTERAZ = 0 : on met à zéro l'information ANTERAZ qui pouvait éventuellement indiquer une divergence des coefficients.

POSTRAZ = 1 : la correction accélérée des coefficients est commandée.

TEMPO = 0 : l'information TEMPO est mise à zéro.

L'information sur la liaison 105 indique l'arrivée d'une période d'échantillonnage telle que m = 0. A chacune de ces périodes le dispositif de commande examine si DIV = 1 : case 111.

On examine d'abord la branche de l'organigramme telle que DIV = 1, ce qui indique que les conditions (5) et (6) de divergence des coefficients sont vérifiées, le dispositif de commande examine si

8

ANTERAZ = 1 : case 112. Si l'information ANTERAZ est égale à 0, elle est mise immédiatement à 1, de même que la variable TEMPO, comme l'indique la case 113. Le processus engagé se poursuit à la période d'échantillonnage suivante telle que m = 0. Si l'on a toujours DIV = 1, et si ANTERAZ = 1, le dispositif de commande examine selon la case 114 si l'information TEMPO est supérieure à DIV. Si l'information TEMPO n'est pas supérieure à TDIV, elle est incrémentée de 1. Le processus se poursuit aux périodes d'échantillonnage suivantes tels que m = 0, jusqu'à ce que le test TEMPO > TDIV indiqué dans la case 114 soit vérifié. Lorsqu'il en est ainsi, les mises à jour des informations indiquées dans la case 110 et les actions correspondantes sont effectuées.

On examine maintenant la branche de l'organigramme dérivée de la case 111 et telle que DIV = 0 (pas de divergence instantanée des coefficients). Le dispositif de commande examine alors si ANTERAZ = 1 : case 116. S'il en est ainsi, l'information ANTERAZ est mise à zéro, en même temps que l'information TEMPO : case 117. Le processus se poursuit à la période d'échantillonnage suivante tel que m = 0.

Si ANTERAZ = 0, le dispositif de commande examine si POSTRAZ = 1 : case 118. S'il en est ainsi, ce qui indique que l'ajustement accéléré des coefficients est commandé, le dispositif de commande examine si CORR = 0 : case 119. L'état de l'information CORR est déterminé dans l'étape du processus représentée par la case 103 (figure 5). Si CORR = 0, ce qui indique que la correction des coefficients n'est pas autorisée, le processus se poursuit à la période d'échantillonnage suivante tel que m = 0. A l'une de ces périodes, où la correction devient autorisée (CORR = 1), le dispositif de commande examine selon la case 120 si l'information TEMPO est inférieure à TPOS, durée de l'ajustement accéléré des coefficients. Si TEMPO < TPOS, l'information TEMPO est incrémentée de 1 (case 121) et le processus se poursuit aux périodes d'échantillonnage suivantes tel que m = 0, jusqu'à ce que TEMPO = TPOS. Au moment où TEMPO = TPOS, l'information POSTRAZ est mise à zéro en même temps que la variable TEMPO : case 122. Ainsi, l'ajustement accéléré des coefficients peut s'effectuer à chaque période d'échantillonnage T, pendant la durée TPOS définie par incréments MT. Après la mise à zéro de l'information POSTRAZ, l'ajustement des coefficients s'effectue avec un écrément ayant sa valeur de régime.

On examine maintenant la branche de l'organigramme dérivée de la case 118 et qui indique que POSTRAZ = 0. Dans ce cas, le dispositif de commande examine si EC = 8 : case 123. S'il en est ainsi, ce qui indique que le point de coordonnées ($N_{AP}$, $N_{AV}$) se trouve dans la zone $Z_8$, l'information TEMPO est mise à l'état 1 (case 124) et le processus recommence à la période d'échantillonnage suivante par l'étape représentée par la case 100 ce qui permet à l'étape représentée par la case 103 de mettre l'écréteur de centre dans un état inactif.

Si EC ≠ 8 ce qui indique une situation représentée par les zones $Z_1$ $Z_7$ sur le diagramme de la figure 4, le dispositif de commande examine si l'information TEMPO est comprise entre 0 et la valeur TEC : case 125. S'il en est ainsi, l'information TEMPO est incrémentée de 1 (case 126) et le processus recommence par l'état représenté par la case 100 jusqu'à ce que l'information TEMPO atteigne la valeur TEC. A ce moment, l'information TEMPO est mise à zéro (case 127). Le processus recommence par la case 100 et à l'étape représentée par la case 103, l'écréteur de centre est commandé dans son état actif avec un seuil d'écrétage non nul, défini par l'une des zones $Z_1$ à $Z_7$.

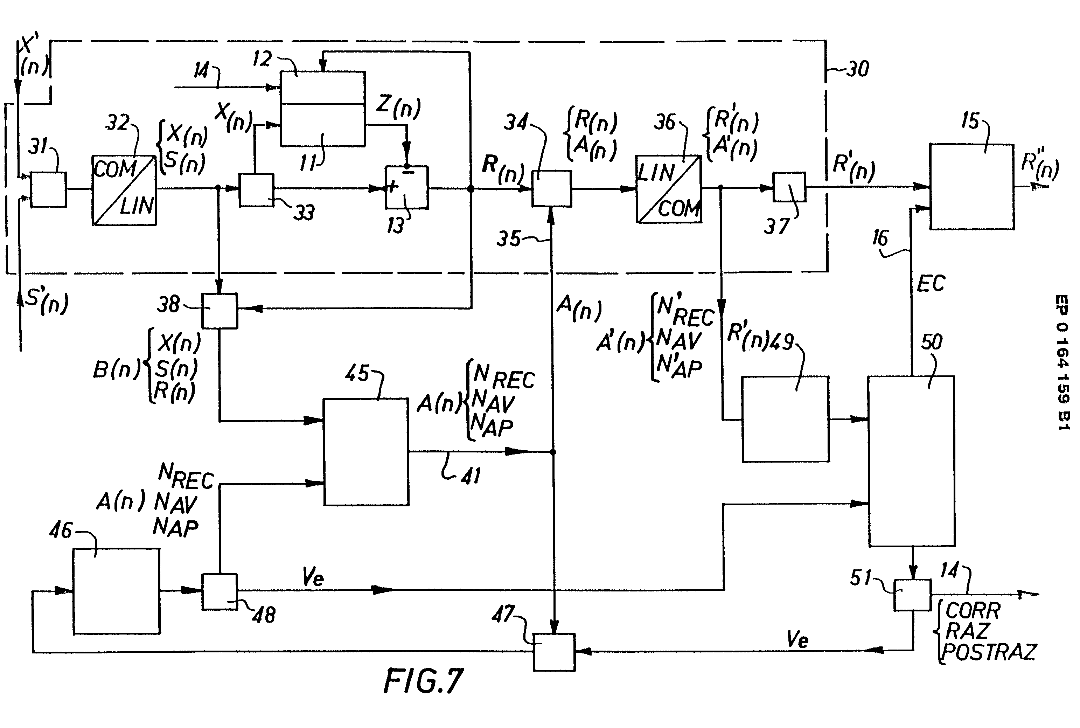

La figure 7 représente le schéma d'un mode de réalisation particulièrement avantageux du dispositif de commande de l'invention, dans lequel on s'est attaché à utiliser les mêmes circuits pour réaliser des fonctions identiques dans la commande de l'annuleur d'écho et de l'écréteur de centre. Avec cette conception, le dispositif de commande peut être réalisé de façon économique avec un nombre réduit de circuits. Pour simplifier le schéma, on n'a pas représenté le générateur et les liaisons pour les signaux de cadencement nécessaires au fonctionnement des différents circuits indiqués, les caractéristiques de ces signaux et leur production étant à la portée de l'homme de l'art à partir du fonctionnement décrit.

Dans le schéma de la figure 7, on se place dans le cas pratique où les signaux reçus et à transmettre dans les voies émission et réception sont des signaux numériques MIC comprimés à 8 éléments binaires selon une loi de codage pseudologarithmique standard (loi A ou loi MU).

L'annuleur d'écho proprement dit que l'on décrit d'abord, comporte les éléments représentés dans le cadre 30. Il reçoit d'une part le signal numérique X'(n) dans la voie réception et le signal numérique S'(n) à l'entrée de la voie émission. Ces signaux comprimés à 8 éléments binaires, dont les échantillons se produisent à la fréquence 1/T = 8 KHZ pour une voie téléphonique sont multiplexés dans le temps à l'aide du multiplexeur 31 afin d'être linéarisés à l'aide d'un seul convertisseur 32 de signal comprimé en signal linéaire. Les signaux linéaires X(n), S(n) à 13 éléments binaires sont appliqués au circuit d'aiguillage 33 pour être séparés. Le signal X(n) est appliqué au filtre adaptatif 11 de l'annuleur d'écho, qui fournit une valeur estimée Ẑ(n) du signal d'écho. Le signal S(n) est appliqué à l'entrée positive du circuit de soustraction 13 dont l'entrée négative reçoit le signal Ẑ(n). Le circuit de soustraction 13 fournit le signal de différence R(n) à 12 éléments binaires qui est appliqué au circuit 12 d'ajustage des coefficients du filtre 11, le fonctionnement de ce circuit d'ajustage 12 étant sous le contrôle d'un signal de commande engendré sur la liaison 14 par le dispositif de commande de l'invention. Le signal de différence R(n) est appliqué au multiplexeur 34 pour être multiplexé dans le temps avec un signal composite A(n) à 12 éléments binaires présent sur la liaison 35 et formé dans le dispositif de commande comme on le décrira par la suite. Le signal R(n) et le signal composite A(n) sont convertis en signaux comprimés R'(n), A'(n) à 8 éléments binaires à l'aide du convertisseur 36 de signal linéaire en signal comprimé. Le signal fourni par le convertisseur 36 est appliqué au circuit d'aiguillage 37 qui prélève le signal R'(n), lequel constitue, sous la forme d'un signal comprimé à 8 éléments binaires le signal de sortie du compensateur d'écho. La totalité du signal R'(n), A'(n) est utilisé dans le dispositif de commande, comme on le décrira par la suite.

Le signal comprimé R'(n) à 8 éléments binaires est appliqué à l'écréteur de centre 15 qui reçoit également du circuit de commande, via la liaison 16, le signal de commande EC à 3 éléments binaires. L'écréteur de centre 15 est constitué par une mémoire PROM qui stocke à différentes adresses des échantillons d'un signal comprimé à 8 éléments binaires. Avec un signal d'adresses formé par les 11 éléments binaires des deux signaux R'(n) et EC et servant à lire la mémoire PROM, l'écréteur de centre peut fournir un signal R''(n) à 8 éléments binaires dont chaque échantillon a la valeur du signal R'(n), lorsque l'amplitude du signal R'(n) est supérieure à un seuil d'écrétage variable et déterminé par EC et a la valeur zéro lorsque l'amplitude du signal R'(n) est égale ou inférieure à ce seuil d'écrétage.

Le dispositif de commande commun à l'annuleur d'écho et à l'écréteur de centre comporte d'abord un dispositif pour calculer les niveaux $N_{REC}$, $N_{AV}$, $N_{AP}$ à chaque période d'échantillonnage T à partir des échantillons des signaux linéaires X(n), S(n), R(n). Pour cela, ces trois derniers signaux sont multiplexés dans le temps à l'aide du multiplexeur 38 pour former le signal multiplexé B(n) défini sur 12 éléments binaires. Le dispositif de calcul de niveaux consiste en un circuit de redressement suivi d'un filtre récursif et peut être réalisé dans son principe comme l'indique la figure 8.

Selon cette figure, les échantillons du signal multiplexé B(n) sont appliqués au circuit de redressement 39 qui supprime le signe des échantillons des signaux X(n), S(n), R(n) composant le signal B(n). Le filtre récursif est du premier ordre et comporte un circuit additionneur 40 qui reçoit sur une entrée les échantillons fournis par le circuit de redressement et sur son autre entrée des échantillons qui, après avoir été prélevés à la sortie 41 du filtre, sont d'abord retardés d'une période d'échantillonnage T à l'aide du circuit de retard 42, puis pondérés par le coefficient k du filtre à l'aide du circuit multiplicateur 43. De plus, entre la sortie du circuit additionneur 40 et la sortie 41 du filtre est inséré un circuit de saturation 44 qui maintient à une valeur constante la sortie du filtre au delà d'un seuil correspondant à un écrétage des signaux MIC. Le dispositif de la figure 8 fonctionne en répartition dans le temps pour traiter au cours d'une période T un échantillon de chacun des trois signaux X(n), S(n) et R(n).

Les traitements du signal B(n) indiqués sur la figure 8 peuvent être réalisés en pratique selon le schéma de la figure 7, en appliquant le signal B(n) à un bloc de calcul 45 dans lequel sont effectués en répartition dans le temps les opérations de calcul représentées sur la figure 8 et qui sont essentiellement une suppression de signe des échantillons réalisée par le circuit 39, une addition réalisée par le circuit 40, l'opération de saturation réalisée par le circuit 44 et enfin une multiplication réalisée par le circuit 43 et pouvant être une simple opération de décalage si le coefficient k du filtre est de la forme a = $(1 — 2^p)$, p étant un nombre entier. La sortie du bloc de calcul 45 constitue la sortie 41 du filtre sur laquelle apparaît le signal A(n) ayant par exemple 16 éléments binaires et résultant du multiplexage dans le temps des niveaux calculés $N_{REC}$, $N_{AV}$ et $N_{AP}$. La mémoire vive 46 actionnée par des signaux de lecture et d'écriture convenables permet de réaliser la fonction de retard T exercée sur la figure 8 par le circuit 42. Son entrée est connectée à la sortie 41 du bloc de calcul par l'intermédiaire du multiplexeur 47, qui permet d'appliquer également à l'entrée de la mémoire un signal $V_e$ précisé par la suite. La sortie de la mémoire vive 46 est reliée à un circuit d'aiguillage 48 qui sépare les signaux lus dans la mémoire sur deux voies. L'une de ces voies transportant les signaux de niveaux $N_{REC}$, $N_{AV}$, $N_{AP}$ est reliée à une deuxième entrée du bloc de calcul 45. L'autre voie sortant de 48 transporte le signal $V_e$ pour une utilisation décrite par la suite.

Le signal A(n) fourni par le bloc de calcul 45 est donc formé des signaux de niveaux $N_{REC}$, $N_{AV}$, $N_{AP}$ répartis dans le temps, ces signaux de niveaux étant des signaux linéaires. Pour réaliser aisément les comparaisons de niveaux, ces signaux de niveaux formant le signal A(n) sont appliqués avec 12 éléments binaires, via le circuit multiplexeur 34, au circuit convertisseur 36 de signal linéaire en signal comprimé, ce circuit convertisseur étant déjà utilisé dans l'annuleur d'écho pour convertir le signal linéaire R(n) fourni par le compensateur d'écho en signal comprimé R'(n).

Le signal fourni par le circuit convertisseur 36 est constitué par les signaux comprimés et répartis dans le temps R'(n), $N'_{REC}$, $N'_{AV}$, $N'_{AP}$ est appliqué au bloc de comparaison 49. Dans ce bloc 49 sont effectuées à chaque période d'échantillonnage, les comparaisons des signaux R'(n), $N'_{REC}$, $N'_{AV}$, $N'_{AP}$ entre eux ou les comparaisons de ces signaux à des seuils fixes. Les comparaisons à effectuer sont déterminées, comme on l'a expliqué, par le diagramme de la figure 4 pour la commande de l'écréteur de centre et par les formules (1) à (6) pour la commande de l'annuleur d'écho, en tenant compte du fait que les signaux à comparer sont comprimés suivant une loi semi-logarithmique. Les résultats des comparaisons effectuées dans le bloc 49 se traduisent par un signal d'information de 8 éléments binaires, 4 éléments binaires constituant l'information destinée à la commande de l'écréteur de centre, 4 autres éléments binaires constituant l'information destinée à la commande du compensateur d'écho. Le bloc de comparaison 49 peut être réalisé essentiellement à l'aide d'une mémoire PROM dans laquelle sont stockées à différentes adresses, les configurations possibles du signal d'information de sortie à 8 éléments binaires. Le signal A'(n) est appliqué à la mémoire PROM pour lire aux adresses convenables, les configurations du signal de sortie correspondant aux signaux constituant le signal A'(n).

Le signal à 8 éléments binaires fournis à chaque instant d'échantillonnage nT par le bloc de comparaison 49 est appliqué au bloc de décision 50 qui réalise le processus que l'on a décrit à l'aide de l'organigramme des figures 5 et 6. Le bloc de décision 50 reçoit également à chaque instant

10

d'échantillonnage le signal $V_e$ à 6 éléments binaires, formé par les informations ANTERAZ, POST RAZ, TEMPO dont le rôle a été décrit précédemment et qui ont été mises à jour et stockées dans la mémoire 46 à un instant précédent. Le circuit de décision 50 fournit sur la liaison 16 le signal EC à 3 éléments binaires pour la commande de l'écrêteur de centre. Il fournit d'autre part à l'entrée du circuit d'aiguillage 51 un signal contenant les informations nécessaires à la commande de l'annuleur d'écho et les informations du signal $V_e$ à stocker temporairement dans la mémoire 46. Le circuit d'aiguillage 51 dirige sur la liaison 14 connectée au circuit d'ajustage des coefficients un signal à 3 éléments binaires contenant les informations CORR, RAZ et POST RAZ dont le rôle a été décrit précédemment. Le circuit d'aiguillage 51 dirige d'autre part le signal $V_e$ à 6 éléments binaires vers l'entrée de la mémoire vive 46, via le multiplexeur 47. Le bloc de décision 50 fonctionnant suivant le processus décrit par les organigrammes des figures 5 et 6 peut être réalisé par exemple au moyen de quelques portes logiques et d'une mémoire PROM, avec un agencement à la portée de l'homme de l'art.

## Revendications

1. Dispositif de commande (20) pour un annuleur d'écho (1) et un écrêteur de centre (15) insérés dans un circuit téléphonique comprenant une voie réception (2) et une voie émission (7) dans laquelle peut se produire un signal d'écho engendré par un signal entrant dans la voie réception (2), l'annuleur d'écho (1) comprenant un filtre adaptatif (11) connecté à la voie réception et un circuit de soustraction (13) inséré dans la voie émission pour soustraire du signal dans la voie émission (7) le signal de sortie du filtre adaptatif (11), un circuit d'ajustage (12) ajustant automatiquement les coefficients du filtre pour que ce dernier fournisse une valeur approchée du signal d'écho, l'écrêteur de centre (15) étant inséré dans la voie émission (7) à la sortie du circuit de soustraction (13) pour y supprimer, lorsqu'il est mis dans son état actif, les signaux d'amplitude égale ou inférieure à un seuil d'écrêtage, le fonctionnement du circuit d'ajustage (12) des coefficients et de l'écrêteur de centre (15) étant sous la dépendance dudit dispositif de commande (20) qui élabore des signaux de commande à partir du signal dans la voie réception et du niveau $N_{REC}$ de ce signal et à partir des niveaux $N_{AV}$ et $N_{AP}$ des signaux dans la voie émission respectivement avant et après le circuit de soustraction, caractérisé en ce que le dispositif de commande comporte des moyens (21, 24) pour comparer le niveau $N_{AV}$ à au moins deux niveaux fixes $N_{AV0}$, $N_{AV1}$ et pour comparer le rapport $N_{AP}/N_{AV}$ à un seuil (a) pouvant varier en fonction du niveau $N_{AV}$, des moyens d'élaboration (24) du signal de commande de l'écrêteur pour mettre celui-ci dans son état actif, seulement lorsque le niveau $N_{AV}$ est compris entre $N_{AV0}$ et $N_{AV1}$ et le rapport $N_{AP}/N_{AV}$ est inférieur audit seuil (a) et pour faire varier le seuil d'écrêtage selon une fonction croissante du niveau $N_{AV}$.

2. Dispositif de commande selon la revendication 1, caractérisé en ce que des moyens (21, 24) sont prévus pour comparer le niveau $N_{AV}$ à plusieurs niveaux fixes compris entre $N_{AV0}$ et $N_{AV1}$ afin de former plusieurs plages consécutives pour le niveau $N_{AV}$, une valeur de seuil d'écrêtage non nulle étant affectée à chaque plage, le signal de commande de l'écrêteur de centre (15) étant élaboré de façon à fournir une information de valeur de seuil d'écrêtage nulle lorsque l'écrêteur de centre (15) doit être commandé pour être mis dans l'état inactif et une information de valeur de seuil d'écrêtage non nulle et dépendant de la plage à laquelle appartient le niveau $N_{AV}$, lorsque l'écrêteur de centre (15) doit être commandé pour être mis dans l'état actif.

3. Dispositif de commande selon l'une des revendications 1 et 2, caractérisé en ce qu'il est agencé pour retarder d'une durée déterminée la commande de l'écrêteur de centre (15) de l'état inactif vers l'état actif.

4. Dispositif de commande selon l'une des revendications 1 à 3, caractérisé en ce qu'il comporte des moyens (22, 24) pour comparer l'amplitude $|R(n)|$ des échantillons du signal dans la voie réception à un niveau $R_0$, pour comparer le rapport $|R(n)|/N_{REC}$ à un seuil (b), pour comparer enfin le niveau $N_{REC}$ à deux niveaux fixes $N_{REC0}$ et $N_{REC1}$, le signal de commande du circuit d'ajustage des coefficients étant élaboré pour autoriser la correction des coefficients lorsque simultanément :

$$|R(n)|>R_0 \qquad |R(n)|/N_{REC}>b \qquad N_{REC0}<N_{REC}<N_{REC1}$$

5. Dispositif de commande selon l'une des revendications 1 à 4, caractérisé en ce qu'il comporte des moyens (22, 24) pour comparer le rapport $N_{AV}/N_{REC}$ à un seuil (c) et le rapport $N_{AP}/N_{AV}$ à un seuil (d), le signal de commande du circuit d'ajustage des coefficients étant élaboré pour autoriser la correction des coefficients lorsque simultanément :

$$N_{AV}/N_{REC}>c \qquad N_{AP}/N_{AV}>d$$

6. Dispositif de commande selon l'une des revendications 1 à 5, caractérisé en ce qu'il comporte des moyens (23, 24) pour comparer le rapport $N_{AP}/N_{AV}$ à un seuil $1+\varepsilon$, $\varepsilon$ étant petit par rapport à 1, pour comparer le niveau $N_{AV}$ à un niveau fixe $N_{AV2}$, le signal de commande du circuit d'ajustage des coefficients étant élaboré pour mettre à zéro les coefficients lorsqu'un état de divergence des coefficients est détecté pendant une durée déterminée, cet état de divergence étant détecté lorsque simultanément :

$$N_{AP}/N_{AV} > 1 + \varepsilon$$

$$N_{AV} > N_{AV2}$$

7. Dispositif de commande selon la revendication 6, caractérisé en ce qu'il est agencé pour qu'après une remise à zéro des coefficients, la rapidité d'ajustage des coefficients soit augmentée pendant une durée déterminée.

8. Dispositif de commande selon l'une des revendications 1 à 7 destiné à un annuleur d'écho (1) et à un écréteur de centre (15) insérés dans un circuit téléphonique transmettant des signaux MIC comprimés, l'annuleur d'écho comportant un convertisseur d'entrée (32) pour convertir le signal comprimé S'(n) entrant dans la voie émission en signal linéaire S(n) et un convertisseur de sortie (36) pour convertir le signal linéaire R(n) fourni par le circuit de soustraction (13) en signal comprimé R'(n) à appliquer à l'écréteur de centre, caractérisé en ce que le convertisseur d'entrée (32) est utilisé en répartition dans le temps pour convertir également le signal comprimé X'(n) dans la voie réception en signal linéaire X(n), les signaux convertis en linéaire S(n), X(n) et le signal linéaire R(n) fournis par le circuit de soustraction (13) étant appliqués en répartition dans le temps à un bloc de calcul (45) agencé avec une mémoire vive pour former un filtre récursif fournissant les signaux de niveaux $N_{REC}$, $N_{AV}$, $N_{AP}$, ces signaux de niveaux étant appliqués en répartition dans le temps avec le signal R(n) audit convertisseur de sortie (36) qui fournit à un bloc de comparaison (49) de niveaux le signal comprimé R'(n) et les signaux de niveaux comprimés $N'_{REC}$, $N'_{AV}$ et $N'_{AP}$.

9. Dispositif de commande selon la revendication 8, caractérisé en ce que le bloc de comparaison (49) de niveaux est agencé pour effectuer à chaque période d'échantillonnage, à partir des signaux comprimés appliqués à son entrée, toutes les comparaisons de niveaux précités requises pour la commande du circuit d'ajustage des coefficients et de l'écréteur de centre, et pour fournir les résultats de ces comparaisons à un bloc de décision (50) qui est agencé pour fournir en fonction des critères de décision précités, au moins :

une information CORR autorisant ou non la correction des coefficients,

une information POST RAZ commandant ou non une augmentation de la rapidité d'ajustage des coefficients,

une information RAZ commandant ou non une remise à zéro des coefficients,

une information EC commandant l'activité ou non de l'écréteur de centre et la valeur du seuil d'écrétage.

10. Dispositif de commande selon la revendication 9, caractérisé en ce que le bloc de décision (50) comporte une logique séquentielle utilisant une seule information TEMPO incrémentable pour former le temps TDIV de détection d'état de divergence des coefficients à l'issue duquel la mise à zéro des coefficients est commandée, le temps TPOS pendant lequel la rapidité d'ajustage des coefficients est augmentée, enfin le temps TEC retardant la commande de l'écréteur de centre (15), de l'état inactif vers l'état actif, l'incrémentation de TEMPO se produisant à une fréquence plus faible que la fréquence d'échantillonnage et étant déclenchée,

quand un état de divergence des coefficients est détecté, la mise à zéro de TEMPO se produisant quand TEMPO dépasse une valeur maximale correspondant au temps TDIV et déclenchant la mise à zéro des coefficients (RAZ = 1) et la commande d'augmentation de la rapidité d'ajustage des coefficients (POSTRAZ = 1),

en l'absence de détection d'état de divergence des coefficients, pendant la commande d'augmentation de la rapidité d'ajustage des coefficients et quand la correction des coefficients est autorisée (CORR = 1), la mise à zéro de TEMPO se produisant quand TEMPO atteint une valeur maximale correspondant au temps TPOS et déterminant la fin de la commande d'augmentation de la rapidité d'ajustage des coefficients,

en l'absence de détection d'état de divergence des coefficients, après la fin de la commande d'augmentation de la rapidité d'ajustage des coefficients et quand l'écréteur de centre (15) est commandé pour être mis dans son état actif, la mise à zéro de TEMPO se produisant quand TEMPO atteint une valeur maximale correspondant au temps TEC et déterminant la mise de l'écréteur de centre dans son état actif.

11. Dispositif de commande selon l'une des revendications 9 et 10, caractérisé en ce que le bloc de comparaison (49) est constitué substantiellement par une mémoire PROM qui stocke à des adresses déterminées les configurations possibles des résultats des comparaisons et qui est lue à l'aide d'un signal d'adresse constitué par les signaux de niveaux appliqués à son entrée de façon à fournir les configurations correspondantes des résultats des comparaisons.

## Claims

1. A control arrangement (20) for controlling an echo canceller (1) and a centre clipper (15) inserted in a telephone circuit, comprising a receive path (2) and a send path (7) in which an echo signal may be generated from a signal entering the receive path (2), the echo canceller (1) comprising an adaptive filter (11) connected to the receive path and a subtractor (13) arranged in the send path for subtracting the output signal of the adaptive filter (11) from the signal in the send path (7), an adjusting circuit (12) for automatically adjusting the coefficients of the filter so that the filter supplies an approximated value of the echo signal, the centre clipper (15) being arranged in the send path (7) at the output of the subtractor (13) for suppressing there, when the clipper is activated, the signals having an amplitude equal to or below a clipping threshold, the coefficient adjusting circuit (12) and the centre clipper (15) operating under the control of said control arrangement (20) which forms control signals from the signal in the receive path and the level $N_{REC}$ of this signal and from the levels $N_{AV}$ and $N_{AP}$ of the signals in the send path before and after the subtractor respectively, characterized in that the control arrangement comprises means (21, 24) for comparing the level $N_{AV}$ to at least two fixed levels $N_{AV0}$, $N_{AV1}$ and for comparing the ratio $N_{AP}/N_{AV}$ to a threshold (a) which can vary as a function of the level $N_{AV}$ forming means (24) for forming the centre clipper control signal to activate the centre clipper only when the level $N_{AV}$ is between $N_{AV0}$ and $N_{AV1}$ and the ratio $N_{AP}/N_{AV}$ is below the threshold (a) and for varying the clipping threshold in accordance with an increasing function of the level $N_{AV}$.

2. The control arrangement as claimed in Claim 1, characterized in that means (21, 24) are provided for comparing the level $N_{AV}$ to a plurality of fixed levels between $N_{AV0}$ and $N_{AV1}$ so as to form a plurality of consecutive ranges for the level $N_{AV}$, a non-zero clipping threshold value being assigned to each range, the centre clipper control signal (15) being formed so as to supply a zero clipping threshold value information when the centre clipper (15) must be inactivated, and a non-zero clipping threshold value information depending on the range to which the level $N_{AV}$ belongs, when the centre clipper (15) must be activated.

3. The control arrangement as claimed in one of the Claims 1 and 2, characterized in that it is arranged for delaying for a predetermined duration the control signal of the centre clipper (15) to change from the inactive state to the active state.

4. The control arrangement as claimed in any one of the Claims 1 to 3, characterized in that it comprises means (22, 24) for comparing the amplitude $|R(n)|$ of the signal samples in the receive path to a given level $R_0$, for comparing the ratio $|R(n)|/N_{REC}$ to a given threshold (b), finally for comparing the level $N_{REC}$ to two fixed levels $N_{REC0}$ and $N_{REC1}$, the control signal of the coefficient adjusting circuit being formed for authorizing the correction of the coefficients when simultaneously :

$$|R(n)|>R_0 \qquad |R(n)|/N_{REC}>b \qquad N_{REC0}<N_{REC}<N_{REC1}$$

5. A control arrangement as claimed in any one of the Claims 1 to 4, characterized in that it comprises means (22, 24) for comparing the ratio $N_{AV}/N_{REC}$ to a given threshold (c) and the ratio $N_{AP}/N_{AV}$ to a given threshold (d), the control signal for the coefficient adjusting circuit being formed for authorizing the correction of the coefficients when simultaneously :

$$N_{AV}/N_{REC}>c \qquad N_{AP}/N_{AV}>d$$

6. A control arrangement as claimed in any one of the Claims 1 to 5, characterized in that it comprises means (23, 24) for comparing the ratio $N_{AP}/N_{AV}$ to a threshold $1 + \varepsilon$, $\varepsilon$ being small relative to 1, for comparing the level $N_{AV}$ to a fixed level $A_{AV2}$, the control signal of the coefficient adjusting circuit being formed for setting the coefficients to zero when a coefficient divergence state is detected during a predetermined period of time, this divergence state being detected when simultaneously :

$$N_{AP}/N_{AV}>1 + \varepsilon$$

$$N_{AV}>N_{AV2}$$

7. A control arrangement as claimed in Claim 6, characterized in that it is arranged for increasing the rate of adjustment of the coefficients during a predetermined period of time after the coefficients have been reset to zero.

8. A control arrangement as claimed in any one of the Claims 1 to 7, intended for an echo canceller (1) and a centre clipper (15) incorporated in a telephone circuit transmitting compressed PCM signals, the echo canceller comprising an input converter (32) for converting the compressed signal $S'(n)$ entering in the send path into a linear signal $S(n)$, and an output converter (36) for converting the linear signal $R(n)$ supplied by the subtractor (13) into a compressed signal $R'(n)$ to be applied to the centre clipper, characterized in that the input converter (32) is used in a time-sharing mode for converting also the compressed signal $X'(n)$ in the receive path into the linear signal $X(n)$, the converted linear signals $S(n)$, $X(n)$ and the linear signal $R(n)$ supplied by the subtractor (13) being applied in a time-sharing mode to a calculating unit (45) provided with a random-access memory for forming a recursive filter supplying the level signals $N_{REC}$, $N_{AV}$, $N_{AP}$, these level signals being applied in time-sharing with the signal $R(n)$ to the output converter (36) which applies the compressed level signal $R'(n)$ and the compressed level signals $N'_{REC}$, $N'_{AV}$ and $N'_{AP}$ to a level comparator unit (49).

9. A control arrangement as claimed in Claim 8, characterized in that the level comparator unit (49) is arranged for effecting at each sampling period, from the compressed signals applied to its input, all of said level comparisons required for controlling the coefficient adjusting circuit and the centre clipper, and for supplying the results of these comparisons to a decision unit (50) which is arranged for supplying, as a function of the above-defined decision criteria, at least :

an information (CORR) authorizing or not authorizing the correction of the coefficients,

an information (POST RAZ) instructing or not instructing an increase in the coefficient adjustment rate,

an information (RAZ) instructing or not instructing the coefficients to be reset to zero,

an information (EC) instructing the centre clipper to be adjusted to the active or to the non-active state and controlling the value of the clipping threshold.

10. A control arrangement as claimed in Claim 9, characterized in that the decision unit (50) comprises a sequential logic using a single incrementable information (TEMPO) for forming the detection period (TDIV) for detecting the coefficient divergence state at the end of which the coefficients are set to zero, the period of time (TPOS) during which the coefficient adjustment rate is increased, finally the period of time (TEC) for delaying the centre clipper (15) from being set from the inactive to the active state, the incrementation of said single information (TEMPO) being effected at a rate lower than the sampling rate and being triggered :

when a coefficient divergence state is detected, said single information (TEMPO) being set to zero when it exceeds a maximum value corresponding to said detection period (TDIV) and triggering the set-to-zero operation of the coefficients (RAZ = 1) and the instruction to increase the coefficient adjustment rate (POSTRAZ = 1),

when no coefficient divergence state is detected, during the instruction to increase to coefficient adjustment rate, and when the correction of the coefficients is authorized (CORR = 1), setting to zero of said single information (TEMPO) being effected when it reaches a maximum value corresponding to said period of time (TPOS) and determining the end of the instruction to increase the coefficient adjustment rate,

when no coefficient divergence state is detected, after the end of the instruction to increase the coefficient adjustment rate and when the centre clipper (15) is activated, setting said single information (TEMPO) to zero being effected when it reaches a maximum value corresponding to said period of time (TEC) and determining activation of the centre clipper.

11. A control arrangement as claimed in one of the Claims 9 and 10, characterized in that the comparator unit (49) is essentially constituted by a PROM memory which in predetermined addresses stores the possible configurations of the results of the comparisons and which is read with the aid of an address signal formed by the level signals applied to its input so as to supply the corresponding configurations of the results of the comparisons.

**Patentansprüche**

1. Steueranordnung (20) für einen Echokompensator (1) und für einen Mitten-Klipper (15) in einer Fernsprechleitung mit einem Empfangskanal (2) und einem Sendekanal (7), in dem ein von einem in den Empfangskanal (2) ankommenden Signal ausgelöstes Echosignal erzeugt werden kann, wobei der Echokompensator (1) ein mit dem Empfangskanal verbundenes adaptives Filter (11) und eine in den Empfangs-kanal aufgenommene Subtraktionsschaltung (13) zum Subtrahieren des Ausgangssignals des adaptiven Filters (11) vom Signal im Sendekanal (7) enthält, wobei eine Einstellschaltung (12) automatisch die Filterkoeffizienten einstellt, damit das Filter einen das Echosignal annähernden Wert erzeugt wobei der Mitten-Klipper (15) in den Sendekanal (7) am Ausgang der Subtraktionsschaltung (13) aufge-nommen ist, um an dieser Stelle die Signale mit einer Amplitude gleich oder niedriger als eine Begrenzerschwelle zu unterdrücken, wenn dieser Klipper sich im aktiven Zustand befindet, wobei die Wirkung der Koeffizienteneinstellschaltung (12) und des Mitten-Klippers (15) von der Steueranordnung (20) abhängig ist, die, ausgehend vom Signal im Empfangskanal und vom $N_{REC}$-Pegel dieses Signals und ausgehend von den Pegeln $N_{AV}$ und $N_{AP}$ der Signale im Sendekanal vor bzw. nach der Subtraktionsschaltung, Steuersignale ausarbeitet, dadurch gekennzeichnet, daß die Steueranordnung Mittel (21, 24) zum Vergleichen des Pegels $N_{AV}$ mit wenigstens zwei festen Pegeln $N_{AV0}$, $N_{AV1}$ und zum Vergleichen des Verhältnisses $N_{AP}/N_{AV}$ mit einer Schwelle (a), die abhängig vom Pegel $N_{AV}$ sich ändern kann, und Ausarbeitungsmittel (24) für das Steuersignal des Klippers zum Einstellen des Klippers in seinen aktiven Zustand enthält, aber nur wenn sich der Pegel $N_{AV}$ zwischen $N_{AV0}$ und $N_{AV1}$ befindet und das Verhältnis $N_{AP}/N_{AV}$ niedriger ist als die Schwelle (a) und zum Abändern der Begrenzerschwelle gemäß einer steigenden Funktion des $N_{AV}$-Pegels.

2. Anordnung nach Anspruch 1, dadurch gekennzeichnet, daß Mittel (21, 24) zum Vergleichen des $N_{AV}$-Pegels mit mehreren festen, zwischen $N_{AV0}$ und $N_{AV1}$ liegenden Pegeln zur Bildung mehrerer aufeinanderfolgender Bereiche für den Pegel $N_{AV}$ vorgesehen sind, wobei jedem Bereich ein Begrenzerschwellenwert ungleich Null zugewiesen wird, das Steuersignal des Mitten-Klippers (15) derart ausarbeitet wird, daß es eine Information für einen Begrenzerschwellenwert gleich Null erzeugt, wenn der Mitten-Klipper (15) zum Eintreten in den passiven Zustand angesteuert werden muß, und eine Information für

14

einen Begrenzerschwelle wert ungleich Null, die vom Bereich, zu dem der Pegel $N_{AV}$ gehört, abhängig ist, wenn der Mitten-Klipper (15) zum Eintreten in den aktiven Zustand angesteuert werden muß.

3. Anordnung nach einem der Ansprüche 1 und 2, dadurch gekennzeichnet, daß sie um eine bestimmte Zeit zum Verzögern des Befehls des Mitten-Klippers (15) zur Übergang vom passiven in den aktiven Zustand eingerichtet ist.

4. Anordnung nach einem der Ansprüche 1 bis 3, dadurch gekennzeichnet, daß sie Mittel (22, 24) enthält zum Vergleichen der Amplitude $|R(n)|$ der Signalabtastwerke im Empfangskanal mit einem Pegel $R_0$, zum Vergleichen des Verhältnisses $|R(n)|/N_{REC}$ mit einer Schwelle (b), zum Vergleichen schließlich des Pegels $N_{REC}$ mit zwei festen Pegeln $N_{REC0}$ und $N_{REC1}$, wobei das Steuersignal der Koeffizienteneinstellschaltung zum Genehmigen der Korrektur der Koeffizienten ausgearbeitet wird, wenn gleichzeitig :

$$|R(n)|>R_0 \qquad |R(n)|/N_{REC}>b \qquad N_{REC0}<N_{REC}<N_{REC1}$$

5. Anordnung nach einem der Ansprüche 1 bis 4, dadurch gekennzeichnet, daß sie Mittel (22, 24) enthält zum Vergleichen des Verhältnisses $N_{AV}/N_{REC}$ mit einer Schwelle (c) und des Verhältnisses $N_{AP}/N_{AV}$ mit einer Schwelle (d), wobei das Steuersignal der Koeffizienteneinstellschaltung zum Genehmigen der Korrektur der Koeffizienten ausgearbeitet wird, wenn gleichzeitig :

$$N_{AV}/N_{REC}>c \qquad N_{AP}/N_{AV}>d$$

6. Anordnung nach einem der Ansprüche 1 bis 5, dadurch gekennzeichnet, daß sie Mittel (23, 24) enthält zum Vergleichen des Verhältnisses $N_{AP}/N_{AV}$ mit einer Schwelle $1 + \varepsilon$, wobei $\varepsilon$ gegen 1 klein ist, zum Vergleichen des Pegels $N_{AV}$ mit einem festen Pegel $N_{AV2}$, wobei das Steuersignal der Koeffizienteneinstellschaltung zum Nullrückstellen der Koeffizienten ausgearbeitet wird, wenn während einer bestimmten Zeit ein Koeffizienten-Divergenzzustand detektiert wird, wobei dieser Divergenzzustand detektiert wird, wenn gleichzeitig :

$$N_{AP}/N_{AV}>1 + \varepsilon$$

$$N_{AV}>N_{AV2}$$

7. Anordnung nach Anspruch 6, dadurch gekennzeichnet, daß sie dazu eingerichtet ist, daß nach einer Nullrückstellung der Koeffizienten die Geschwindigkeit der Koeffizienteneinstellung während einer bestimmten Zeit erhöht wird.

8. Anordnung nach einem der Ansprüche 1 bis 7, bestimmt für einen Echokompensator (1) und für einen Mitten-Klipper (15), die in eine, komprimierte PCM-Signale übertragende Telefon-leitung aufgenommen sind, wobei der Echokompensator einen Eingangs-umsetzer (32) zum Umsetzen des in den Sendekanal eintretenden, komprimierten Signals $S'(n)$ in ein lineares Signal und einen Ausgangsumsetzer (36) zum Umsetzen des von der Subtraktionsschaltung (13) gelieferten linearen Signals $R(n)$ in ein dem Mitten-Klipper zuzuführendes komprimiertes Signal $R'(n)$ enthält, dadurch gekennzeichnet, daß der Eingangsumsetzer (32) in Zeitmultiplex ebenfalls zum Umsetzen des komprimierten Signals $X'(n)$ im Empfangskanal in ein lineares Signal $X(n)$ verwendet wird, wobei die umgesetzte linearen Signale $S(n)$, $X(n)$ und das lineare Signal $R(n)$ aus der Subtraktionsschaltung (13) in Zeitmultiplex einer Recheneinheit (45) zugeführt werden, die zur Bildung eines Rekursivfilters, das die Pegelsignale $N_{REC}$, $N_{AV}$ und $N_{AP}$ liefert, mit einem Direktzugriffspeicher ausgerüstet ist, wobei diese Pegelsignale in Zeitmultiplex mit dem Signal $R(n)$ dem Ausgangsumsetzer (36) zugeführt werden, der einer Pegelvergleichseinheit (49) das komprimierte Signal $R'(n)$ und die komprimierten Pegelsignale $N'_{REC}$, $N'_{AV}$ und $N'_{AP}$ zuführt.

9. Anordnung nach Anspruch 8, dadurch gekennzeichnet, daß die Pegelvergleichseinheit (49) dazu ausgelegt ist, in jeder Abtastperiode und ausgehend von an ihren Eingang gelegten, komprimierten Signalen alle erforderlichen Pegelvergleiche für die Steuerung der Koeffizienteneinstellschaltung und des Mitten-Klippers durchzuführen, und die Ergebnisse dieser Vergleiche einer Entscheidungseinheit (50) zuzuführen, die abhängig von den vorgenannten Entscheidungskriterien ausgelegt ist zur Lieferung wenigstens :

einer Information CORR zur möglichen Genehmigung der Korrektur der Koeffizienten,

einer Information POST RAZ zur möglichen Steuerung einer Geschwindigkeitserhöhung für die Koeffizienteneinstellung,

einer Information RAZ zur möglichen Steuerung einer Nullrückstellung der Koeffizienten,

einer Information EC zur Steuerung des möglichen Betriebs des Mitten-Klippers und des Begrenzerschwellenwerts.

10. Anordnung nach Anspruch 9, dadurch gekennzeichnet, daß die Entscheidungseinheit (50) eine sequentielle Logik enthält, die nur eine inkrementierbare Information TEMPO benutzt zum Bilden einer Zeit TDIV zur Detektion des Zustands der Koeffizienten-Divergenz, wobei nach Ablauf dieser Zeit die Nullrückstellung der Koeffizienten angesteuert wird, weiter zum Bilden einer Zeit TPOS, in der die Geschwindigkeit der Koeffizienteneinstellung erhöht wird, und schließlich zum Bilden einer Zeit TEC zum Verzögern der Steuerung des Mitten-Klippersenzers (15) vom passiven in den aktiven Zustand, wobei die Inkrementierung von TEMPO bei einer niedrigeren Frequenz als die Abtastfrequenz erfolgt und dieser Vorgang ausgelöst wird,

wenn ein Koeffizienten-Divergenzzustand detektiert wird, wobei die Nullrückstellung von TEMPO erfolgt, wenn TEMPO einen maximalen Wert entsprechend der Zeit TDIV überschreitet, der die Nullrückstellung der Koeffizienten (RAZ = 1) sowie die Steuerung der Geschwindigkeitserhöhung der Koeffizienteneinstellung (POSTRAZ = 1) auslöst,

in Abwesenheit einer Detektion des Zustands der Koeffizienten-Divergenz, während der Steuerung der Geschwindigkeitserhöhung der Koeffizienteneinstellung und wenn die Koeffizientienkorrektur genehwird (CORR = 1), wobei die Nullrückstellung von TEMPO erfolgt, wenn TEMPO einen maximalen Wert entsprechend der Zeit TPOS erreicht, der das Ende der Geschwindigkeitserhöhungssteuerung der Koeffizienteneinstellung bestimmt,

in Abwesenheit einer Detektion des Zustands der Koeffizienten-Divergenz am Ende der Steuerung der Geschwindigkeitserhöhung der Koeffizienteneinstellung und wenn der Mitten-Klipper (15) in seinen aktiven Zustand gesteuert wird, wobei die Nullrückstellung von TEMPO erfolgt, wenn TEMPO einen maximalen Wert entsprechend der Zeit TEC erreicht, der die Eintretung des Mitteln-Klipper in seinen aktiven Zustand bestimmt.

11. Anordnung nach einem der Ansprüche 9 und 10, dadurch gekennzeichnet, daß die Vergleichseinheit (49) im wesentlichen aus einem PROM-Speicher besteht, der an bestimmten Adressen die möglichen Konfigurationen der Vergleichsergebnisse aufnimmt und der mit Hilfe eines Adreßsignals gelesen wird, das aus den Pegelsignalen besteht, die derart an den Speichereingang gelegt werden, daß der Speicher die mit den Vergleichsergebnissen übereinstimmenden Konfigurationen liefert.

FIG.1

FIG.2

EP 0 164 159 B1

FIG.3

FIG.4

FIG.8

2

FIG.5

FIG.6

FIG.6

EP 0 164 159 B1

FIG.7

EP 0 164 159 B1